# EUROPEAN PATENT APPLICATION

(11) **EP 4 794 233 A1**
(43) Date of publication of application: **19.08.2026**
(21) Application number: 24895933.0
(22) Date of filing: 23.09.2024
(51) Int. Cl.: H04L 1/1607

(54) **ERROR-TOLERANT DATA TRANSMISSION METHOD AND COMMUNICATION APPARATUS**

(30) Priority: 29.11.2023 CN 202311614439
(71) Applicant: HUAWEI TECHNOLOGIES CO., LTD., Shenzhen 518129 (CN)
(72) Inventor: YANG, Yuwen, Shenzhen, Guangdong 518129 (CN); QIN, Yi, Shenzhen, Guangdong 518129 (CN); TAN, Zhiyuan, Shenzhen, Guangdong 518129 (CN); XU, Rui, Shenzhen, Guangdong 518129 (CN)
(74) Representative: Gill Jennings & Every LLP
(86) International application number: PCT/CN2024/120304
(87) International publication number: WO 2025/112835

(57) **Abstract**

An error-tolerant data transmission method and a communication device are provided. The data transmission method includes: A second device sends a plurality of data units to a first device; after receiving the plurality of data units, the first device may send first feedback information to the second device based on a quantity of erroneous data units, in the plurality of data units, that are received in error and a first threshold, where the first feedback information indicates that the erroneous data units are received in error; and the second device may perform data retransmission based on the first feedback information. In this application, the second device does not need to retransmit all erroneous data units, but retransmits an erroneous data unit that needs to be retransmitted and that is determined based on the quantity of erroneous data units and the first threshold. This provides a specific degree of error tolerance, thereby reducing a quantity of retransmissions and improving transmission efficiency.

## Description

This application claims priority to Chinese Patent Application No. 202311614439.9, filed with the China National Intellectual Property Administration on November 29, 2023 and entitled "ERROR-TOLERANT DATA TRANSMISSION METHOD AND COMMUNICATION APPARATUS", which is incorporated herein by reference in its entirety.

### TECHNICAL FIELD

Embodiments of this application relate to the communication field, and more specifically, to an error-tolerant data transmission method and a communication apparatus.

### BACKGROUND

Extended reality (extended reality, XR) services in a current 5th generation (5th generation, 5G) system or new radio (new radio, NR) implement basic interaction between a person and a virtual world. However, technologies such as holography in the future require immersive experience, and have higher requirements on cellular communication, where an average access rate is to be increased from current 120 Mbps to 2 Gbps, and interaction latency is further to be reduced from current latency of about 20 ms to about 5 ms, all of which pose a further evolution requirement for 5G. It can be learned that the XR services have characteristics and requirements of low latency and high rates.

Internet video communication technologies have been studied in terms of congestion control, bit rate adaptation, and the like, but still face some challenges. In real-time video applications, data packet jitter and data packet loss have significant adverse impact on user experience. When a data packet jitters, the data packet arrives at a receive end at an irregular speed, resulting in instability in video decoding and playback. When a data packet is lost, data packet retransmission needs to be performed, which causes additional latency, resulting in stuttering and unsmoothness.

In view of this, how to reduce a quantity of data packet retransmissions and improve transmission efficiency becomes a problem that urgently needs to be resolved.

### SUMMARY

This application provides a communication method and a communication apparatus, to reduce a quantity of retransmissions and improve transmission efficiency.

According to a first aspect, a communication method is provided. The method may be performed by a first device (for example, a network device or a terminal device), may be performed by a module (for example, a processor, a chip, or a chip system) in the first device, or may be implemented by a logical node, a logical module, or software that can implement all or a part of functions of the first device. This is not limited in this application.

The communication method includes: receiving a plurality of data units; and sending first feedback information based on a quantity of erroneous data units, in the plurality of data units, that are received in error and a first threshold, where the first feedback information indicates that the erroneous data units are received in error. Further, in some examples, the first feedback information may indicate retransmission of the erroneous data unit.

The data unit may be a transport block TB, a code block group CBG, or a code block CB.

The first threshold may be a maximum quantity of erroneous data units; or the first threshold may be a maximum proportion of the quantity of erroneous data units to a total quantity of the data units.

The "erroneous data unit received in error" may be understood as a data unit with a check error when the first device checks the plurality of received data units. For example, when the data unit is a TB, the "erroneous data unit received in error" may be a TB with a TB-CRC check error when the first device performs a cyclic redundancy check CRC check on the received TB (that is, a TB-CRC check). For another example, when the data unit is a CB, the "erroneous data unit received in error" may be a CB with a CB-CRC check error when the first device performs the CRC check on the received CB (that is, a CB-CRC check). For another example, when the data unit is a CBG, the "erroneous data unit received in error" may be a CBG corresponding to a case in which there is at least one CB-CRC check error in the CBG, when the first device performs the CRC check on a CB in the received CBG.

In the solution provided in this embodiment of this application, after receiving the plurality of data units, the first device may obtain the quantity of erroneous data units, in the plurality of data units, that are received in error; determine, based on the quantity of erroneous data units and the first threshold, an erroneous data unit that needs to be fed back; and send the first feedback information to a second device, so that the second device can determine, based on the first feedback information, the erroneous data unit received in error, and retransmit the erroneous data unit. In other words, in this application, the second device does not need to retransmit all erroneous data units, but retransmits an erroneous data unit that needs to be retransmitted and that is determined based on the quantity of erroneous data units and the first threshold. This provides a specific degree of error tolerance, thereby reducing a quantity of retransmissions and improving transmission efficiency.

With reference to the first aspect, in some implementations of the first aspect, the sending the first feedback information based on the quantity of erroneous data units, in the plurality of data units, that are received in error and the first threshold includes: sending the first feedback information when a proportion of the quantity of erroneous data units that are received in error to a quantity of the plurality of data units is greater than the first threshold; or skipping sending the first feedback information when the proportion of the quantity of erroneous data units that are received in error to the quantity of the plurality of data units is less than or equal to the first threshold.

It should be noted that, in this implementation, the first threshold is a proportion value. For example, the first threshold may be 10%, 20%, or 30%.

In a possible implementation, the sending the first feedback information based on the quantity of erroneous data units, in the plurality of data units, that are received in error and the first threshold includes: sending the first feedback information when a proportion of the quantity of erroneous data units that are received in error to a quantity of the plurality of data units is greater than or equal to the first threshold; or skipping sending the first feedback information when the proportion of the quantity of erroneous data units that are received in error to the quantity of the plurality of data units is less than the first threshold.

It should be noted that, in this implementation, the first threshold is a proportion value. For example, the first threshold may be 10%, 20%, or 30%.

In the solution provided in this embodiment of this application, the first device may determine, based on the proportion of the quantity of erroneous data units to the total quantity of the data units being greater than the first threshold, to send the first feedback information; or the first device may determine, based on the proportion of the quantity of erroneous data units to the total quantity of the data units being greater than the first threshold, to send the first feedback information. In other words, the first device sends the first feedback information to the second device only when the proportion of the quantity of erroneous data units to the total quantity of the data units meets a specific threshold, where the first feedback information indicates that the erroneous data units are received in error, so that the second device can determine, based on the first feedback information, the erroneous data unit received in error, and retransmit the erroneous data unit without retransmitting all the erroneous data units. This provides a specific degree of error tolerance, thereby reducing the quantity of retransmissions and improving transmission efficiency.

With reference to the first aspect, in some implementations of the first aspect, the sending the first feedback information based on the quantity of erroneous data units, in the plurality of data units, that are received in error and the first threshold includes: sending the first feedback information when the quantity of erroneous data units that are received in error is greater than the first threshold; or skipping sending the first feedback information when the quantity of erroneous data units that are received in error is less than or equal to the first threshold.

It should be noted that, in this implementation, the first threshold is a numerical value. For example, the first threshold may be 100, 200, or 300.

In a possible implementation, the sending the first feedback information based on the quantity of erroneous data units, in the plurality of data units, that are received in error and the first threshold includes: sending the first feedback information when the quantity of erroneous data units that are received in error is greater than or equal to the first threshold; or skipping sending the first feedback information when the quantity of erroneous data units that are received in error is less than the first threshold.

It should be noted that, in this implementation, the first threshold is a numerical value. For example, the first threshold may be 100, 200, or 300.

In the solution provided in this embodiment of this application, the first device may determine, based on the quantity of erroneous data units being greater than the first threshold, to send the first feedback information; or the first device may determine, based on the quantity of erroneous data units being greater than or equal to the first threshold, to send the first feedback information. In other words, the first device sends the first feedback information to the second device only when the quantity of erroneous data units meets a specific threshold, where the first feedback information indicates that the erroneous data units are received in error, so that the second device can determine, based on the first feedback information, the erroneous data unit received in error, and retransmit the erroneous data unit without retransmitting all the erroneous data units. This provides a specific degree of error tolerance, thereby reducing the quantity of retransmissions and improving transmission efficiency.

With reference to the first aspect, in some implementations of the first aspect, the first threshold is indicated by header information corresponding to the plurality of data units.

In a possible implementation, when the data unit is a TB, one TB may carry one header. For example, each TB may carry one header, and therefore, header information of each TB may carry the first threshold. Alternatively, a plurality of TBs share one header, and therefore, the header information may carry the first threshold. For example, the header information carries a first identifier, and the first identifier indicates the first threshold.

In another possible implementation, when the data unit is a CBG, one CBG may carry one header. For example, each CBG may carry one header, and therefore, header information of each CBG may carry the first threshold. Alternatively, a plurality of CBGs share one header (compared with one TB sharing one header), and therefore, the header information may carry the first threshold. For example, the header information carries a first identifier, and the first identifier indicates the first threshold.

In still another possible implementation, when the data unit is a CB, one CB may carry one header. For example, each CB may carry one header, and therefore, header information of each CB may carry the first threshold. Alternatively, a plurality of CBs share one header (compared with one TB sharing one header), and therefore, the header information may carry the first threshold. For example, the header information carries a first identifier, and the first identifier indicates the first threshold.

In the solution provided in this embodiment of this application, the first threshold may be indicated by the header information corresponding to the plurality of data units that are received by the first device. In this case, after receiving the plurality of data units, the first device may obtain through parsing the first threshold carried in the header information of the plurality of data units, so that the first device can determine, based on the first threshold, whether to send the first feedback information.

With reference to the first aspect, in some implementations of the first aspect, the first threshold may be carried in the plurality of data units, but is not carried in the header information corresponding to the plurality of data units. For example, the plurality of data units (for example, TBs) include a medium access control control element MAC-CE, and the first threshold may be carried in the MAC-CE.

Specifically, after receiving the plurality of data units, a physical PHY layer of the first device performs a CRC check, and delivers upward a data packet and a corresponding CRC check result to a MAC layer. The MAC layer may learn of a position of the MAC-CE in the TB and has permission to parse feature stream information of the MAC-CE (for example, the first threshold). Then, the MAC layer of the first device determines that, if CRC checks of all CBs that correspond to the MAC-CE succeed, the MAC layer parses the information of the MAC-CE, and determines whether a remaining data block reaches the first threshold. If the remaining data block reaches the first threshold, a retransmission instruction (for example, the first feedback information) is fed back to the PHY layer, and the PHY layer sends the retransmission instruction (for example, the first feedback information) to the second device.

In this case, after receiving the plurality of data units, the first device may also obtain the first threshold from the plurality of data units through parsing, so that the first device can determine, based on the first threshold, whether to send the first feedback information.

With reference to the first aspect, in some implementations of the first aspect, the communication method further includes: receiving first indication information, where the first indication information indicates the first threshold.

In a possible implementation, if the first device is the terminal device, the first indication information may be carried in downlink control signal DCI signaling. In other words, the first indication information may be carried in DCI signaling from a network device.

In another possible implementation, if the first device is the network device, the first indication information may be carried in uplink control signal UCI signaling. In other words, the first indication information may be carried in UCI signaling from a terminal device.

In the solution provided in this embodiment of this application, the first threshold may be independently indicated by the first indication information, and is not carried in the plurality of data units. In this way, the first device can directly obtain the first threshold from the first indication information, and does not need to obtain the first threshold from the plurality of data units through parsing, so that the first device can also determine, based on the first threshold, whether to send the first feedback information.

With reference to the first aspect, in some implementations of the first aspect, the communication method further includes: receiving second indication information; and the sending the first feedback information based on the quantity of erroneous data units, in the plurality of data units, that are received in error and the first threshold includes: determining, based on the second indication information, to send the first feedback information based on the quantity of erroneous data units, in the plurality of data units, that are received in error and the first threshold.

The second indication information may indicate to start an error-tolerant transmission service. It should be understood that, when the first device receives the second indication information, it is equivalent to that an error-tolerant mode is started, and the first feedback information may be sent based on the quantity of erroneous data units and the first threshold. When the first device does not receive the second indication information, it is equivalent to that the error-tolerant mode is not started. In this case, if the first device determines that there is a data unit received in error, the first device needs to feed back to a peer end that the data unit is received in error.

In an example, the second indication information may include the header information. In another example, the second indication information may include the first indication information. In other words, the first device obtains the first threshold, or the first threshold is configured. It is considered that the error-tolerant mode is started, that is, the error-tolerant transmission service is started.

In a possible implementation, if the first device is the terminal device, the second indication information may be carried in downlink control signal DCI signaling. In other words, the second indication information may be carried in DCI signaling from a network device.

In another possible implementation, if the first device is the network device, the second indication information may be carried in uplink control signal UCI signaling. In other words, the second indication information may be carried in UCI signaling from a terminal device.

In the solution provided in this embodiment of this application, the first device may determine, based on the received second indication information, whether to start the error-tolerant transmission service. When the error-tolerant transmission service is started, the first device may send the first feedback information based on the quantity of erroneous data units and the first threshold, and does not need to feed back all the erroneous data units, so that the second device can determine, based on the first feedback information, the erroneous data unit received in error, and retransmit the erroneous data unit, thereby helping reduce the quantity of retransmissions and improve transmission efficiency.

According to a second aspect, a communication method is provided. The method may be performed by a second device (for example, a terminal device or a network device), may be performed by a module (for example, a processor, a chip, or a chip system) in the second device, or may be implemented by a logical node, a logical module, or software that can implement all or a part of functions of the second device. This is not limited in this application.

It should be noted that, the second device and a first device are different communication devices. If the first device is a network device, the second device is the terminal device. If the first device is a terminal device, the second device is the network device.

The communication method includes: sending a plurality of data units; receiving first feedback information, where the first feedback information indicates that an erroneous data unit is received in error; and retransmitting the erroneous data unit based on the first feedback information. The erroneous data unit is an erroneous data unit, in the plurality of data units, that is received in error by the first device. The first feedback information is determined by the first terminal device based on a quantity of erroneous data units and a first threshold.

In some examples, the first feedback information may further directly indicate an erroneous data unit to be retransmitted, so that the second device can resend the erroneous data unit based on the first feedback information.

The data unit may be a transport block TB, a code block group CBG, or a code block CB.

The first threshold may be a maximum quantity of erroneous data units; or the first threshold may be a maximum proportion of the quantity of erroneous data units to a total quantity of the data units.

The "erroneous data unit received in error" may be understood as a data unit with a check error when the first device checks the plurality of received data units. For example, when the data unit is a TB, the "erroneous data unit received in error" may be a TB with a TB-CRC check error when the first device performs a cyclic redundancy check CRC check on the received TB (that is, a TB-CRC check). For another example, when the data unit is a CB, the "erroneous data unit received in error" may be a CB with a CB-CRC check error when the first device performs the CRC check on the received CB (that is, a CB-CRC check). For another example, when the data unit is a CBG, the "erroneous data unit received in error" may be a CBG corresponding to a case in which there is at least one CB-CRC check error in the CBG, when the first device performs the CRC check on a CB in the received CBG.

In the solution provided in this embodiment of this application, after sending the plurality of data units, the second device may determine, based on the first feedback information fed back by the first device, the erroneous data unit received in error, so that the second device can determine the erroneous data unit based on the first feedback information, and retransmit the erroneous data unit.

With reference to the second aspect, in some implementations of the second aspect, the first threshold is indicated by header information corresponding to the plurality of data units.

In a possible implementation, when the data unit is a TB, one TB may carry one header. For example, each TB may carry one header, and therefore, header information of each TB may carry the first threshold. Alternatively, a plurality of TBs share one header, and therefore, the header information may carry the first threshold. For example, the header information carries a first identifier, and the first identifier indicates the first threshold.

In another possible implementation, when the data unit is a CBG, one CBG may carry one header. For example, each CBG may carry one header, and therefore, header information of each CBG may carry the first threshold. Alternatively, a plurality of CBGs share one header (compared with one TB sharing one header), and therefore, the header information may carry the first threshold. For example, the header information carries a first identifier, and the first identifier indicates the first threshold.

In still another possible implementation, when the data unit is a CB, one CB may carry one header. For example, each CB may carry one header, and therefore, header information of each CB may carry the first threshold. Alternatively, a plurality of CBs share one header (compared with one TB sharing one header), and therefore, the header information may carry the first threshold. For example, the header information carries a first identifier, and the first identifier indicates the first threshold.

In the solution provided in this embodiment of this application, the first threshold may be indicated by the header information corresponding to the plurality of data units. In this case, after receiving the plurality of data units, the first device may obtain through parsing the first threshold carried in the header information of the plurality of data units, so that the first device can determine, based on the first threshold, whether to send the first feedback information.

With reference to the second aspect, in some implementations of the second aspect, the first threshold may be carried in the plurality of data units, but is not carried in the header information corresponding to the plurality of data units. For example, the plurality of data units (for example, TBs) include a medium access control control element MAC-CE, and the first threshold may be carried in the MAC-CE.

In this case, when the second device sends the plurality of data units, after receiving the plurality of data units, the first device may obtain the first threshold from the plurality of data units through parsing, so that the first device can determine, based on the first threshold, whether to send the first feedback information to the second device.

With reference to the second aspect, in some implementations of the second aspect, the communication method further includes: sending first indication information, where the first indication information indicates the first threshold.

In a possible implementation, if the second device is the network device, the first indication information may be carried in downlink control signal DCI signaling. In other words, the first indication information may be carried in DCI signaling from a network device.

In another possible implementation, if the second device is the terminal device, the first indication information may be carried in uplink control signal UCI signaling. In other words, the first indication information may be carried in UCI signaling from a terminal device.

In the solution provided in this embodiment of this application, the first threshold may be independently indicated by the first indication information, and is not carried in the plurality of data units, so that the first device can directly obtain the first threshold from the first indication information, and does not need to obtain the first threshold from the plurality of data units through parsing, so that the first device can also determine, based on the first threshold, whether to send the first feedback information to the second device.

With reference to the second aspect, in some implementations of the second aspect, the communication method further includes: sending second indication information. The second indication information may indicate to start an error-tolerant transmission service.

It should be understood that, when the second device sends the second indication information, and after the first device receives the second indication information, it is equivalent to that an error-tolerant mode is started, and the first feedback information may be sent based on the quantity of erroneous data units and the first threshold. When the first device does not receive the second indication information, it is equivalent to that the error-tolerant mode is not started. In this case, if the first device determines that there is a data unit received in error, the first device needs to feed back to the second device that the data unit is received in error.

According to a third aspect, a communication method is provided. The method may be performed by a first device (for example, a network device or a terminal device), may be performed by a module (for example, a processor, a chip, or a chip system) in the first device, or may be implemented by a logical node, a logical module, or software that can implement all or a part of functions of the first device. This is not limited in this application.

The communication method includes: receiving a plurality of data units; and sending second feedback information based on an erroneous data unit, in the plurality of data units, that is received in error and a first threshold, where the second feedback information indicates the erroneous data unit received in error. Specifically, the first device may determine, based on a quantity of erroneous data units, in the plurality of data units, that are received in error and the first threshold, to skip sending first feedback information, and to send the second feedback information.

The data unit may be a transport block TB, a code block group CBG, or a code block CB.

The "erroneous data unit received in error" may be understood as a data unit with a check error when the first device checks the plurality of received data units. For example, when the data unit is a TB, the "erroneous data unit received in error" may be a TB with a TB-CRC check error when the first device performs a cyclic redundancy check CRC check on the received TB (that is, a TB-CRC check). For another example, when the data unit is a CB, the "erroneous data unit received in error" may be a CB with a CB-CRC check error when the first device performs the CRC check on the received CB (that is, a CB-CRC check). For another example, when the data unit is a CBG, the "erroneous data unit received in error" may be a CBG corresponding to a case in which there is at least one CB-CRC check error in the CBG, when the first device performs the CRC check on a CB in the received CBG.

In the solution provided in this embodiment of this application, the first device may determine, based on the erroneous data unit and the first threshold, to skip sending the first feedback information and to send the second feedback information, where the second feedback information may indicate some specific data units received in error to a second device. However, the quantity of erroneous data units is within a specific range, and the first device can automatically recover without performing data retransmission, thereby reducing a quantity of retransmissions and improving transmission efficiency. In addition, the second device may also perform channel measurement such as channel estimation or channel prediction based on the second feedback information.

With reference to the third aspect, in some implementations of the third aspect, the sending the second feedback information based on the erroneous data unit, in the plurality of data units, that is received in error and the first threshold includes: skipping, when a proportion of the quantity of erroneous data units that are received in error to a quantity of the plurality of data units is less than or equal to the first threshold, sending the first feedback information; and sending the second feedback information.

It should be noted that, in this implementation, the first threshold is a proportion value. For example, the first threshold may be 10%, 20%, or 30%.

In a possible implementation, the sending the second feedback information based on the erroneous data unit, in the plurality of data units, that is received in error and the first threshold includes: skipping, when a proportion of the quantity of erroneous data units that are received in error to a quantity of the plurality of data units is less than the first threshold, sending the first feedback information; and sending the second feedback information.

It should be noted that, in this implementation, the first threshold is a proportion value. For example, the first threshold may be 10%, 20%, or 30%.

In the solution provided in this embodiment of this application, the first device determines, based on a relationship between a proportion of the quantity of erroneous data units to a total quantity of the data units and the first threshold, whether to send the first feedback information or the second feedback information, where the first feedback information may indicate that there are some specific erroneous data units to be retransmitted, and the second feedback information may indicate that there are some specific erroneous data units received in error, so that the second device can perform different operations based on different feedback information.

With reference to the third aspect, in some implementations of the third aspect, the sending the second feedback information based on the erroneous data unit, in the plurality of data units, that is received in error and the first threshold includes: skipping, when the quantity of erroneous data units that are received in error is less than or equal to the first threshold, sending the first feedback information; and sending the second feedback information.

It should be noted that, in this implementation, the first threshold is a numerical value. For example, the first threshold may be 100, 200, or 300.

In a possible implementation, the sending the second feedback information based on the erroneous data unit, in the plurality of data units, that is received in error and the first threshold includes: skipping, when the quantity of erroneous data units that are received in error is less than the first threshold, sending the first feedback information; and sending the second feedback information.

It should be noted that, in this implementation, the first threshold is a numerical value. For example, the first threshold may be 100, 200, or 300.

In the solution provided in this embodiment of this application, the first device determines, based on a relationship between the quantity of erroneous data units and the first threshold, whether to send the first feedback information or the second feedback information, where the first feedback information may indicate that there are some specific erroneous data units to be retransmitted, and the second feedback information may indicate that there are some specific erroneous data units received in error, so that the second device can perform different operations based on different feedback information.

With reference to the third aspect, in some implementations of the third aspect, the first threshold is indicated by header information corresponding to the plurality of data units.

In a possible implementation, when the data unit is a TB, one TB may carry one header. For example, each TB may carry one header, and therefore, header information of each TB may carry the first threshold. Alternatively, a plurality of TBs share one header, and therefore, the header information may carry the first threshold. For example, the header information carries a first identifier, and the first identifier indicates the first threshold.

In another possible implementation, when the data unit is a CBG, one CBG may carry one header. For example, each CBG may carry one header, and therefore, header information of each CBG may carry the first threshold. Alternatively, a plurality of CBGs share one header (compared with one TB sharing one header), and therefore, the header information may carry the first threshold. For example, the header information carries a first identifier, and the first identifier indicates the first threshold.

In still another possible implementation, when the data unit is a CB, one CB may carry one header. For example, each CB may carry one header, and therefore, header information of each CB may carry the first threshold. Alternatively, a plurality of CBs share one header (compared with one TB sharing one header), and therefore, the header information may carry the first threshold. For example, the header information carries a first identifier, and the first identifier indicates the first threshold.

With reference to the third aspect, in some implementations of the third aspect, the first threshold may be carried in the plurality of data units, but is not carried in the header information corresponding to the plurality of data units. For example, the plurality of data units (for example, TBs) include a medium access control control element MAC-CE, and the first threshold may be carried in the MAC-CE.

With reference to the third aspect, in some implementations of the third aspect, the communication method further includes: receiving first indication information, where the first indication information indicates the first threshold.

In a possible implementation, if the first device is the terminal device, the first indication information may be carried in downlink control signal DCI signaling. In other words, the first indication information may be carried in DCI signaling from a network device.

In another possible implementation, if the first device is the network device, the first indication information may be carried in uplink control signal UCI signaling. In other words, the first indication information may be carried in UCI signaling from a terminal device.

It should be noted that, for beneficial effects of the third aspect, refer to related beneficial effects of the first aspect. Details are not described herein again.

According to a fourth aspect, a communication method is provided. The method may be performed by a second device (for example, a terminal device or a network device), may be performed by a module (for example, a processor, a chip, or a chip system) in the second device, or may be implemented by a logical node, a logical module, or software that can implement all or a part of functions of the second device. This is not limited in this application.

It should be noted that, the second device and a first device are different communication devices. If the first device is a network device, the second device is the terminal device. If the first device is a terminal device, the second device is the network device.

The communication method includes: sending a plurality of data units; and receiving second feedback information, where the second feedback information indicates an erroneous data unit received in error. Further, in some examples, the second device may perform channel measurement such as channel estimation or channel prediction based on the second feedback information.

The data unit may be a transport block TB, a code block group CBG, or a code block CB.

The "erroneous data unit received in error" may be understood as a data unit with a check error when the first device checks the plurality of received data units. For example, when the data unit is a TB, the "erroneous data unit received in error" may be a TB with a TB-CRC check error when the first device performs a cyclic redundancy check CRC check on the received TB (that is, a TB-CRC check). For another example, when the data unit is a CB, the "erroneous data unit received in error" may be a CB with a CB-CRC check error when the first device performs the CRC check on the received CB (that is, a CB-CRC check). For another example, when the data unit is a CBG, the "erroneous data unit received in error" may be a CBG corresponding to a case in which there is at least one CB-CRC check error in the CBG, when the first device performs the CRC check on a CB in the received CBG.

In the solution provided in this embodiment of this application, after sending the plurality of data units, the second device may receive the second feedback information from the first device, where the second feedback information may indicate the erroneous data unit received in error. After receiving the second feedback information, the second device does not perform data retransmission, but may perform channel measurement such as channel estimation or channel prediction based on the second feedback information.

According to a fifth aspect, a communication apparatus is provided. The communication apparatus may be a first device (for example, a network device or a terminal device), a module (for example, a processor, a chip, or a chip system) in the first device, or a logical node, a logical module, or software that implements all or a part of functions of the first device. This is not limited in this application.

The communication apparatus includes an interface unit and a processing unit. The interface unit is configured to receive a plurality of data units. The processing unit is configured to control, based on a quantity of erroneous data units, in the plurality of data units, that are received in error and a first threshold, the interface unit to send first feedback information, where the first feedback information indicates that the erroneous data units are received in error. Further, in some examples, the first feedback information may indicate retransmission of the erroneous data unit.

With reference to the fifth aspect, in some implementations of the fifth aspect, the data unit is a transport block TB, a code block group CBG, or a code block CB.

With reference to the fifth aspect, in some implementations of the fifth aspect, that the processing unit is configured to control, based on the quantity of erroneous data units, in the plurality of data units, that are received in error and the first threshold, the interface unit to send the first feedback information includes: The processing unit is configured to control, when a proportion of the quantity of erroneous data units that are received in error to a quantity of the plurality of data units is greater than the first threshold, the interface unit to send the first feedback information.

With reference to the fifth aspect, in some implementations of the fifth aspect, that the processing unit is configured to control, based on the quantity of erroneous data units, in the plurality of data units, that are received in error and the first threshold, the interface unit to send the first feedback information includes: The processing unit is configured to control, when the quantity of erroneous data units that are received in error is greater than the first threshold, the interface unit to send the first feedback information.

With reference to the fifth aspect, in some implementations of the fifth aspect, the first threshold is indicated by header information corresponding to the plurality of data units.

With reference to the fifth aspect, in some implementations of the fifth aspect, the interface unit is further configured to receive first indication information, where the first indication information indicates the first threshold.

With reference to the fifth aspect, in some implementations of the fifth aspect, the interface unit is further configured to receive second indication information; and that the processing unit is configured to control, based on the quantity of erroneous data units, in the plurality of data units, that are received in error and the first threshold, the interface unit to send the first feedback information includes: The processing unit is configured to determine, based on the second indication information, to control the interface unit to send the first feedback information based on the quantity of erroneous data units, in the plurality of data units, that are received in error and the first threshold.

It should be noted that, for beneficial effects of the fifth aspect, refer to the related beneficial effects of the first aspect. Details are not described herein again.

According to a sixth aspect, a communication apparatus is provided. The communication apparatus may be a second device (for example, a network device or a terminal device), a module (for example, a processor, a chip, or a chip system) in the second device, or a logical node, a logical module, or software that implements all or a part of functions of the second device. This is not limited in this application.

It should be noted that, the second device and a first device are different communication devices. If the first device is a network device, the second device is the terminal device. If the first device is a terminal device, the second device is the network device.

The communication apparatus includes an interface unit and a processing unit. The interface unit is configured to send a plurality of data units; and receive first feedback information, where the first feedback information indicates that an erroneous data unit is received in error. The processing unit is configured to retransmit the erroneous data unit based on the first feedback information.

The erroneous data unit is an erroneous data unit, in the plurality of data units, that is received in error by the first device. The first feedback information is determined by the first terminal device based on a quantity of erroneous data units and a first threshold.

In some examples, the first feedback information may further directly indicate an erroneous data unit to be retransmitted, so that the second device can resend the erroneous data unit based on the first feedback information.

With reference to the sixth aspect, in some implementations of the sixth aspect, the data unit may be a transport block TB, a code block group CBG, or a code block CB.

With reference to the sixth aspect, in some implementations of the sixth aspect, the interface unit is further configured to receive first indication information, where the first indication information indicates the first threshold.

With reference to the sixth aspect, in some implementations of the sixth aspect, the interface unit is further configured to receive second indication information. The second indication information may indicate to start an error-tolerant transmission service.

It should be noted that, for beneficial effects of the sixth aspect, refer to related beneficial effects of the second aspect. Details are not described herein again.

According to a seventh aspect, a communication apparatus is provided. The communication apparatus may be a first device (for example, a network device or a terminal device), a module (for example, a processor, a chip, or a chip system) in the first device, or a logical node, a logical module, or software that implements all or a part of functions of the first device. This is not limited in this application.

The communication apparatus includes an interface unit and a processing unit. The interface unit is configured to receive a plurality of data units. The processing unit is configured to control, based on an erroneous data unit, in the plurality of data units, that is received in error and a first threshold, the interface unit to send second feedback information, where the second feedback information indicates that the erroneous data unit is received in error.

With reference to the seventh aspect, in some implementations of the seventh aspect, that the processing unit is configured to control, based on the erroneous data unit, in the plurality of data units, that is received in error and the first threshold, the interface unit to send the second feedback information includes: The processing unit is configured to control, when a proportion of a quantity of erroneous data units that are received in error to a quantity of the plurality of data units is less than or equal to the first threshold, the interface unit to send the second feedback information.

In a possible implementation, that the processing unit is configured to control, based on the erroneous data unit, in the plurality of data units, that is received in error and the first threshold, the interface unit to send the second feedback information includes: The processing unit is configured to control, when the proportion of the quantity of erroneous data units that are received in error to the quantity of the plurality of data units is less than the first threshold, the interface unit to send the second feedback information.

With reference to the seventh aspect, in some implementations of the seventh aspect, that the processing unit is configured to control, based on the erroneous data unit, in the plurality of data units, that is received in error and the first threshold, the interface unit to send the second feedback information includes: The processing unit is configured to control, when a quantity of erroneous data units that are received in error is less than or equal to the first threshold, the interface unit to send the second feedback information.

In a possible implementation, that the processing unit is configured to control, based on the erroneous data unit, in the plurality of data units, that is received in error and the first threshold, the interface unit to send the second feedback information includes: The processing unit is configured to control, when the quantity of erroneous data units that are received in error is less than the first threshold, the interface unit to send the second feedback information.

It should be noted that, for beneficial effects of the seventh aspect, refer to related beneficial effects of the third aspect. Details are not described herein again.

According to an eighth aspect, a communication apparatus is provided. The communication apparatus may be a second device (for example, a network device or a terminal device), a module (for example, a processor, a chip, or a chip system) in the second device, or a logical node, a logical module, or software that implements all or a part of functions of the second device. This is not limited in this application.

It should be noted that, the second device and a first device are different communication devices. If the first device is a network device, the second device is the terminal device. If the first device is a terminal device, the second device is the network device.

The communication apparatus includes an interface unit. The interface unit is configured to send a plurality of data units; and receive second feedback information, where the second feedback information indicates an erroneous data unit received in error.

Further, in some examples, the communication apparatus further includes a processing unit. The processing unit is configured to enable the second device to perform channel measurement such as channel estimation or channel prediction based on the second feedback information.

The data unit may be a transport block TB, a code block group CBG, or a code block CB.

It should be noted that, for beneficial effects of the eighth aspect, refer to related beneficial effects of the fourth aspect. Details are not described herein again.

According to a ninth aspect, a communication apparatus is provided, and includes a processor. The processor is coupled to a memory, and the memory is configured to store a program or instructions. When the program or the instructions are executed by the processor, the apparatus is caused to perform the method in any one of the first aspect or the possible implementations of the first aspect; the apparatus is caused to perform the method in any one of the second aspect or the possible implementations of the second aspect; the apparatus is caused to perform the method in any one of the third aspect or the possible implementations of the third aspect; or the apparatus is caused to perform the method in any one of the fourth aspect or the possible implementations of the fourth aspect.

According to a tenth aspect, a computer-readable storage medium is provided. The computer-readable storage medium stores a computer program or instructions. When the computer program or the instructions are run, the method in any one of the first aspect and the possible implementations of the first aspect is performed; the method in any one of the second aspect and the possible implementations of the second aspect is performed; the method in any one of the third aspect and the possible implementations of the third aspect is performed; or the method in any one of the fourth aspect and the possible implementations of the fourth aspect is performed.

According to an eleventh aspect, a computer program product is provided, and includes instructions. When the instructions are run, the method in any one of the first aspect and the possible implementations of the first aspect is performed; the method in any one of the second aspect and the possible implementations of the second aspect is performed; the method in any one of the third aspect and the possible implementations of the third aspect is performed; or the method in any one of the fourth aspect and the possible implementations of the fourth aspect is performed.

According to a twelfth aspect, this application provides a communication system, including a first device and a second device. The first device is configured to perform the method in any one of the first aspect and the possible implementations of the first aspect, and the second device is configured to perform the method in any one of the second aspect and the possible implementations of the second aspect. Alternatively, the first device is configured to perform the method in any one of the third aspect and the possible implementations of the third aspect, and the second device is configured to perform the method in any one of the fourth aspect and the possible implementations of the fourth aspect.

According to a thirteenth aspect, this application provides a chip system, including a processor. The processor is configured to execute a computer program or instructions in a memory, so that the chip system implements the method in any one of the first aspect and the possible implementations of the first aspect, implements the method in any one of the second aspect and the possible implementations of the second aspect, implements the method in any one of the third aspect and the possible implementations of the third aspect, or implements the method in any one of the fourth aspect and the possible implementations of the fourth aspect.

It should be noted that, for beneficial effects of the ninth aspect to the thirteenth aspect, refer to the related beneficial effects of the first aspect, the second aspect, the third aspect, or the fourth aspect. Details are not described herein again.

### BRIEF DESCRIPTION OF DRAWINGS

FIG. 1 is a diagram of a communication system to which an embodiment of this application is applicable;
FIG. 2 is a diagram of parallel transmission of a plurality of HARQ processes;
FIG. 3 is a diagram of CBG-based retransmission;
FIG. 4 is a diagram of adding a CRC to a TB or a CB;
FIG. 5 is a diagram of data stream transmission between some layers;
FIG. 6 is a schematic flowchart of a communication method according to an embodiment of this application;
FIG. 7 to FIG. 14 are diagrams of transferring a data packet from a MAC layer to a PHY layer;
FIG. 15 is a schematic flowchart of another communication method according to an embodiment of this application; and
FIG. 16 and FIG. 17 are block diagrams of communication apparatuses according to embodiments of this application.

### DESCRIPTION OF EMBODIMENTS

The following describes technical solutions of this application with reference to accompanying drawings.

In descriptions of embodiments of this application, unless otherwise specified, "/" means "or". For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" below are merely used for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "include", "have" and any variations thereof are intended to cover a non-exclusive inclusion. For example, a procedure, a method, a system, a product, or a device including a series of steps or units is not limited to listed steps or units, but optionally further includes another unlisted step or unit, or optionally further includes another inherent step or unit of the procedure, the method, the product, or the device.

In embodiments of this application, words such as "example" or "for example" are used for representing giving an example, an illustration, or a description. Any embodiment or design scheme described as an "example" or "for example" in embodiments of this application should not be construed as being more preferred or having more advantages than another embodiment or design scheme. To be precise, use of the words such as "example" or "for example" is intended to present a related concept in a specific manner for ease of understanding.

In this application, "at least one piece (item)" means one or more pieces. "A plurality of" means two or more. "At least two pieces (items)" means two or three or more. "And/or" is used for describing an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, and (or) c may indicate: a, b, c, "a and b", "a and c", "b and c", or "a, b, and c", where a, b, and c may be singular or plural. Both "when..." and "if" mean that corresponding processing is performed in an objective case, are not intended to limit time, do not require a determining action during an implementation, and do not mean that there is another limitation.

In this application, "sending information" may be understood as that a device sends information to another device, or may be understood as that a logical module in the device sends information to another logical module. For example, "A network device sends information" may be understood as that the network device sends information to another device (for example, a terminal device), or may be understood as that a logical module in the network device sends information to another logical module in the network device.

In this application, "receiving information" may be understood as that a device receives information from another device, or may be understood as that a logical module in the device receives information from another logical module. For example, "A network device receives information" may be understood as that the network device receives information from another device (for example, a terminal device), or may be understood as that a logical module in the network device receives information from another logical module in the network device.

In this application, "sending information to ... (for example, a terminal device)" may be understood as that a destination end of the information is the terminal device, and may include directly or indirectly sending the information to the terminal device. "Receiving information from... (for example, a terminal device)" may be understood as that a source end of the information is the terminal device, and may include directly or indirectly receiving the information from the terminal device. Necessary processing, for example, a format change, may be performed on the information between the source end from which the information is sent and the destination end, but the destination end can understand valid information from the source end. A similar expression in this application may be understood similarly. Details are not described herein again.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 5.5G system, a 6th generation (6th generation, 6G) system, or a future communication system.

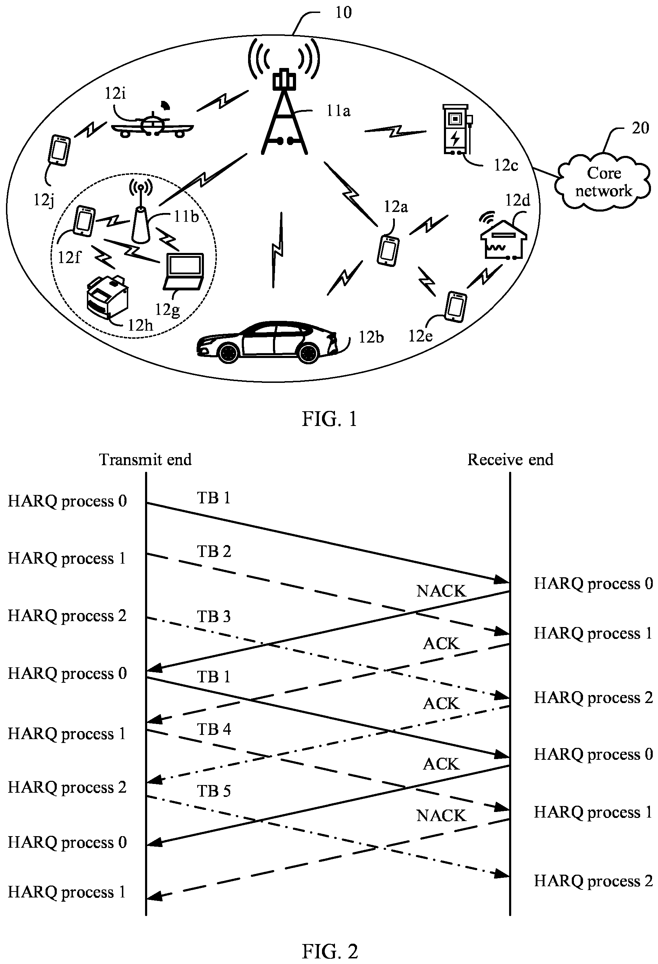

FIG. 1 is a diagram of a communication system to which an embodiment of this application is applicable. As shown in FIG. 1, the communication system includes a radio access network (radio access network, RAN) 10 and a core network (core network, CN) 20. The RAN 10 includes at least one RAN node (for example, 11a and 11b, which are collectively referred to as 11) and at least one terminal device (for example, 12a to 12j, which are collectively referred to as 12). The RAN 10 may further include another RAN node, for example, a wireless relay device and/or a wireless backhaul device (not shown in FIG. 1). The terminal device 12 is connected to the RAN node 11 in a wireless manner. The RAN node 11 is connected to the core network 20 in a wireless or wired manner. A core network device in the core network 20 and the RAN node 11 in the RAN 10 may be different physical devices, or may be a same physical device that integrates a logical function of the core network and a logical function of the radio access network.

The RAN 10 may be a cellular system related to the 3rd generation partnership project (3rd generation partnership project, 3GPP), for example, a 4G or 5G mobile communication system or a future-oriented evolved system (for example, a 6G mobile communication system). Alternatively, the RAN 10 may be an open access network (open RAN, O-RAN or ORAN), a cloud radio access network (cloud radio access network, CRAN), or a wireless fidelity (wireless fidelity, Wi-Fi) system. Alternatively, the RAN 10 may be a communication system that integrates the foregoing two or more systems.

The RAN node 11 may sometimes also be referred to as a network device, an access network device, a RAN entity, an access node, or the like, and forms a part of the communication system, to help the terminal device implement wireless access. A plurality of RAN nodes 11 in the communication system may be nodes of a same type, or may be nodes of different types. In some scenarios, roles of the RAN node 11 and the terminal device 12 are relative. For example, a network element 12i may be a helicopter or an uncrewed aerial vehicle, and may be configured as a mobile base station. For a terminal device 12j accessing the RAN 10 via the network element 12i, the network element 12i is a base station. However, for a base station 11a, the network element 12i is a terminal device. Both the RAN node 11 and the terminal 12 sometimes are referred to as communication apparatuses. For example, network elements 11a and 11b may be understood as communication apparatuses having a function of the base station, and network elements 12a to 12j may be understood as communication apparatuses having a function of the terminal.

In a possible scenario, the RAN node may be a base station (base station, BS), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 11a in FIG. 1), a micro base station or an indoor base station (for example, 11b in FIG. 1), a relay node, a donor node, or a radio controller in a CRAN scenario.

Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the RAN node in this application may alternatively be implemented by using a software function running on hardware or by using a virtualization function instantiated on a platform (for example, a cloud platform). Alternatively, the RAN node in this application may be a logical node, a logical module, or software that can implement all or a part of functions of the RAN node.

In another possible scenario, a plurality of RAN nodes coordinate to assist the terminal device in implementing wireless access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different communication systems, the CU (or the CU-CP or the CU-UP), the DU, or the RU may also have different names. However, a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

It should be understood that, quantities of devices in the foregoing communication system are merely used as examples, and are not limited thereto. During an actual application, the communication system may further include more terminal devices and more RAN devices, and may further include another device.

The network device in embodiments of this application may be a device configured to communicate with a terminal device. The network device may be a base station (base transceiver station, BTS) in a GSM system or a CDMA system, a NodeB (NodeB, NB) in a WCDMA system, an evolved NodeB (evolved NodeB, eNB or eNodeB) in an LTE system, or a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like. For example, the network device may include an access network device and/or a core network device.

The terminal device in embodiments of this application is a device having a wireless transceiver function, may be a fixed device or a mobile device, or may be user equipment, an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), or the like. Alternatively, the terminal device may be a handheld device (for example, a mobile phone), a wearable device, a vehicle-mounted device, or a wireless apparatus (for example, a communication module, a modem, or a chip system) built in the foregoing device. The terminal device is configured to connect to a person, an object, a machine, and the like, and may be widely used in various scenarios, for example, including but not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communications, M2M/MTC), the internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an uncrewed aerial vehicle, and a robot. This is not limited in embodiments of this application.

XR services in current 5G NR implement basic interaction between a person and a virtual world. However, technologies such as holographic in the future require immersive experience, and have higher requirements on cellular communication, where an average access rate is to be increased from current 120 Mbps to 2 Gbps, and interaction latency is further to be reduced from current latency of about 20 ms to about 5 ms, all of which pose a further evolution requirement for 5G. It can be learned that the XR services have characteristics and requirements of low latency and high rates.

Internet video communication technologies have been studied in terms of congestion control, bit rate adaptation, and the like, but still face some challenges. In real-time video applications, data packet jitter and data packet loss have significant adverse impact on user experience. When a data packet jitters, the data packet arrives at a receive end at an irregular speed, resulting in instability in video decoding and playback. When a data packet is lost, data packet retransmission needs to be performed, which causes additional latency, resulting in stuttering and unsmoothness.

A hybrid automatic repeat request (hybrid automatic repeat request, HARQ) mechanism at a media access control (media access control, MAC) layer is a most commonly used retransmission mechanism, which implements fast retransmission by immediately feeding back a result of information transmission success or failure to a transmit end via a receive end.

The HARQ mechanism uses a stop-and-wait protocol. The stop-and-wait protocol includes the following two characteristics: (1) The receive end sends feedback information to the transmit end no matter whether reception is correct or not. (2) The transmit end needs to receive acknowledgment information from the receive end before continuing to send information. Next information is not sent before previous information is acknowledged.

The stop-and-wait protocol requires the transmit end to stop and wait for feedback from the receive end each time after sending the information, which results in a low throughput. Therefore, the HARQ uses a plurality of stop-and-wait processes for parallel processing. When one process is waiting for acknowledgment, the transmit end may use another process to continue to send the information. Similarly, when processing information received by a process, the receive end may use another process to continue to receive information. A plurality of HARQ processes perform parallel processing to form a HARQ entity. Each uplink or downlink carrier corresponds to one HARQ entity. As defined in 3GPP, one HARQ entity supports a maximum of 16 HARQ processes. When the plurality of processes are used for transmission, each process has independent HARQ feedback. The HARQ feedback is the feedback information sent by the receive end in the HARQ mechanism. The transmit end determines, based on the feedback information from the receive end, whether data is successfully transmitted. ACK (acknowledgement) indicates that the transmission succeeds, and NACK (negative acknowledgement) indicates that the transmission fails.

FIG. 2 is a diagram of parallel transmission of the plurality of HARQ processes. The HARQ allows parallel transmission of three processes, and the three processes may be, for example, a HARQ process 0, a HARQ process 1, and a HARQ process 2. The transmit end sends a transport block 1 (transport block 1, TB 1) to the receive end via the HARQ process 0, and the transmit end may send another TB via the HARQ process 0 only after the receive end feeds back ACK. The transmit end may send a TB 2 to the receive end via the HARQ process 1. After the receive end feeds back ACK, the transmit end may continue to send a TB 4 to the receive end via the HARQ process 1, and the transmit end may send another TB via the HARQ process 1 only after the receive end feeds back ACK. The transmit end may send a TB 3 to the receive end via the HARQ process 2. After the receive end feeds back ACK, the transmit end may continue to send a TB 5 to the receive end via the HARQ process 2, and the transmit end may send another TB via the HARQ process 2 only after the receive end feeds back ACK.

If the transmit end sends TBs in units of code blocks (code blocks, CBs), the receive end may feed back only a CB that fails to be decoded. In this way, the transmit end only needs to retransmit the CB that fails to be decoded. This has lower retransmission overheads than retransmitting the entire TB. However, if feedback is performed in units of CBs, because one TB includes a plurality of CBs, an amount of feedback information increases, and control signaling overheads are accordingly increased.

Therefore, a compromise manner, namely retransmission based on a code block group (code block group, CBG), is introduced in NR. A plurality of CBs form one CBG, and feedback is performed based on each CBG. During retransmission, only a CBG in error is retransmitted. Compared with retransmission of the entire TB, CBG-based retransmission can reduce resource consumption. Compared with feedback of each CB, CBG-based feedback can reduce signaling overheads. As specified in 3GPP TS 38.331, a TB may be divided into two, four, six, or eight CBGs based on a quantity of initially transmitted CBs, and the CBGs are indicated to UE via a higher-layer signaling parameter. Once CBG division is completed, a mapping relationship between each CBG and each CB is fixed, and does not change even if a plurality of retransmissions are performed, thereby ensuring accuracy of retransmitted information.

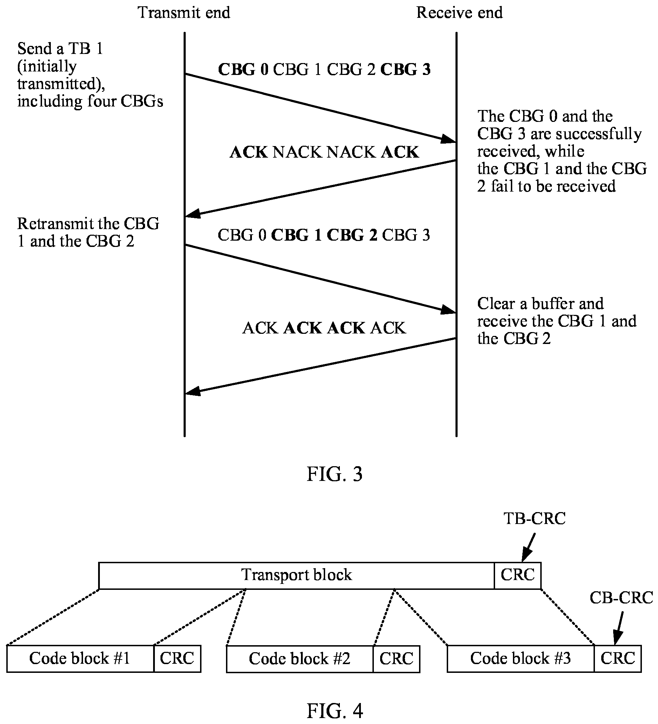

FIG. 3 is a diagram of the CBG-based retransmission. The transmit end may send the TB 1 to the receive end during initial transmission, and the TB 1 may include four CBGs. The receive end successfully receives a CBG 0 and a CBG 3, while a CBG 1 and a CBG 2 fail to be received. Therefore, the receive end may feed back ACK, NACK, NACK, and ACK to the transmit end. After receiving feedback information, the transmit end learns that the CBG 1 and the CBG 2 fail to be transmitted. In this case, the transmit end retransmits the CBG 1 and the CBG 2 to the receive end. The receive end clears a buffer and re-receives the CBG 1 and the CBG 2, thereby successfully receiving the CBG 1 and the CBG 2, so that all CBGs in the TB 1 for transmission are successfully received. Therefore, the receive end may feed back ACK, ACK, ACK, and ACK to the transmit end.

It should be noted that, before sending the data to the receive end, the transmit end needs to add a cyclic redundancy check (cyclic redundancy check, CRC) to the TB, so that the receive end verifies whether the received data is correct.

For example, FIG. 4 is a diagram of adding the CRC to the TB or the CB. A physical layer of the transmit end may add the CRC to the TB (denoted as a TB-CRC), so that a CB-CRC check can be performed at the receive end, to obtain a correct TB. In addition, the physical layer of the transmit end may further divide, according to a specific rule, the TB to which the CRC is added into several CBs, and then add the CRC to each CB (denoted as a CB-CRC), so that the CB-CRC check can be performed at the receive end, to obtain a correct CB.

According to an existing bit-level CRC check feedback method, a check code with a length of R bits is first appended to to-be-sent data with a length of K bits, and then a new frame is generated and sent to the receive end. After receiving the new frame, the receive end verifies whether the received data is correct based on the received data and the check code. If there is an error, a retransmission request is fed back. A feedback error rate of the HARQ mechanism can reach about 1%. For some data services with ultra-reliable ultra-low latency (for example, an ultra-reliable low-latency communication (ultra-reliable low-latency communication, URLLC) scenario), the feedback error rate of the HARQ mechanism cannot meet a requirement. To reduce the feedback error rate of the HARQ, additional feedback signaling is required. Because the HARQ feedback is transmitted very frequently, high control signaling overheads are caused. Frequent retransmissions also result in considerable data resource overheads, eventually leading to large latency.

In addition, for an AI-based video encoding and decoding system, a transmitted feature stream has an error-tolerant characteristic. Even if a bit is received in error, a video with good quality may still be recovered at the receive end by setting a generator for repair. Therefore, the existing bit-level CRC check cannot use the error-tolerant characteristic of the feature stream in a feature stream encoding and decoding system. To meet a plurality of retransmissions in the bit-level CRC check, communication efficiency is reduced, leading to poor user experience.

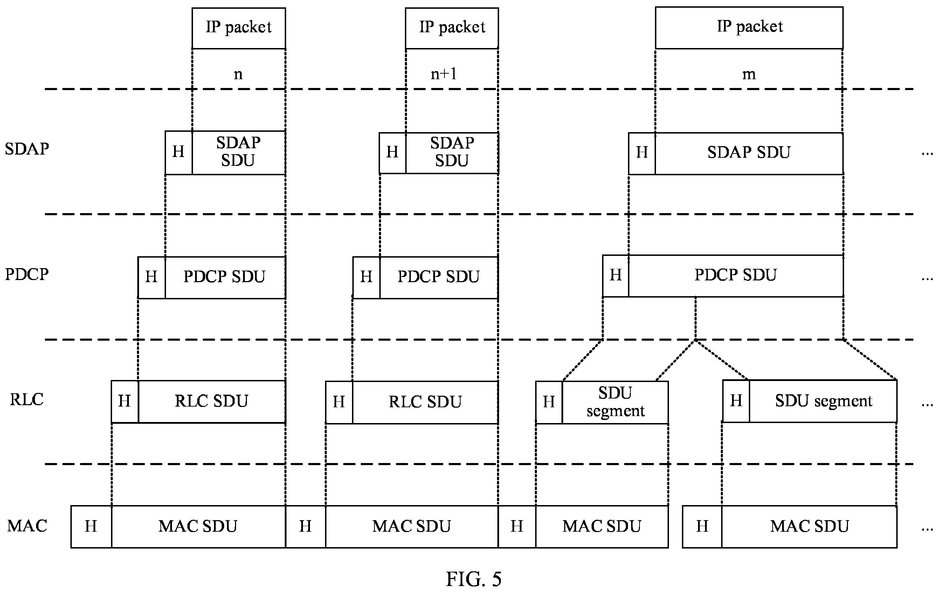

FIG. 5 is a diagram of data stream transmission between some layers. As shown in FIG. 5, an application layer may deliver an internet protocol (internet protocol, IP) data packet layer by layer downward. An access stratum includes a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical layer (physical layer, PHY).

An upper layer transfers a protocol data unit (protocol data unit, PDU) to a lower layer. After receiving a PDU of the upper layer, the lower layer considers the PDU of the upper layer as a service data unit (service data unit, SDU) of the current layer, and a PDU of the current layer may be formed by adding a header (denoted as H). After the header is added, the PDU of the current layer is transmitted to a next lower layer. Therefore, the PDU may be considered as the header plus the SDU. Several PDUs of the RLC layer may form a complete MAC PDU. The MAC PDU is carried on the TB, and the TB may be further transmitted to the physical layer. A size of the MAC PDU is equal to a size of the TB.

In an existing NR protocol architecture, a data structure transmitted at each layer does not involve information related to the error-tolerant characteristic of the feature stream. Information related to feature stream data (for example, error tolerance information of the feature stream) of the application layer cannot be transferred to the physical layer, and the physical layer cannot identify the feature stream data. Consequently, the error-tolerant characteristic of the feature stream cannot be used for improving communication efficiency.

For the foregoing problem, this application is intended to resolve how to bring the error-tolerant characteristic of the feature stream from the application layer to the physical layer for transmission, to implement a data check method having the error-tolerant characteristic, thereby reducing a quantity of retransmissions and improving a transmission rate. It should be understood that, the solutions provided in this application are particularly applicable to the XR services with the low latency and the high rate.

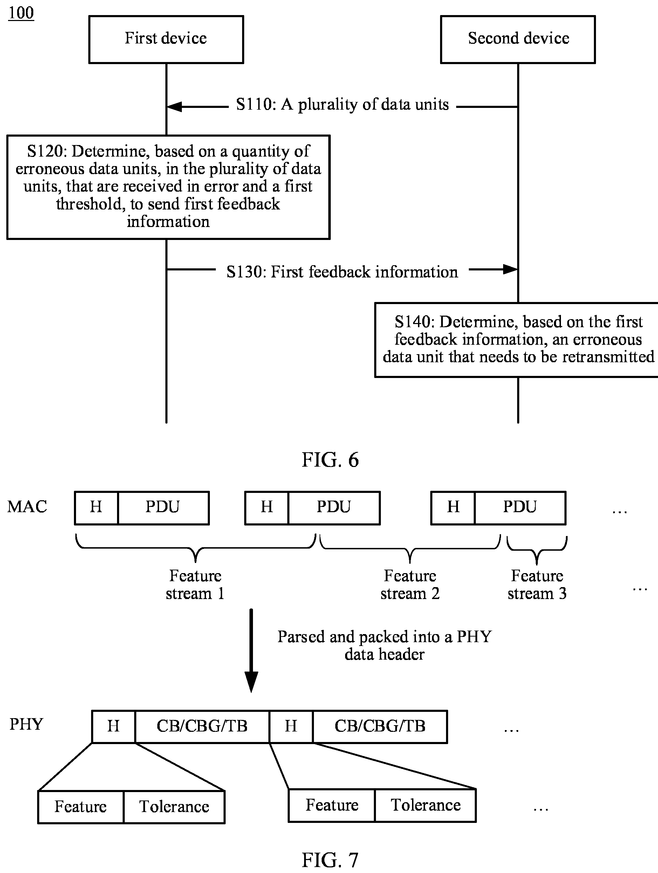

With reference to FIG. 6 to FIG. 15, the following describes in detail a communication method provided in this application. For ease of understanding and description, the following describes the method in embodiments of this application by using interaction between a first device (for example, a terminal device or a network device) and a second device (for example, a network device or a terminal device) as an example. However, this does not constitute any limitation on an execution body of the method in embodiments of this application. For example, the method performed by the terminal device may also be performed by a module (for example, a circuit, a chip, or a chip system) in the terminal, or may be implemented by a logical node, a logical module, or software that can implement all or a part of functions of the terminal device. The method performed by the network device may also be performed by a module (for example, a circuit, a chip, or a chip system) in the network device, or may be implemented by a logical node, a logical module, or software that can implement all or a part of functions of the network device.

It should be understood that, the first device and the second device are different devices. For example, the first device may be a receive end device, and the second device may be a transmit end device. For another example, the first device may be the network device 11 in FIG. 1, and the second device may be the terminal device 12 in FIG. 1; or the first device may be the terminal device 12 in FIG. 1, and the second device may be the network device 11 in FIG. 1. This is not limited in this application.

FIG. 6 is a schematic flowchart of a communication method according to an embodiment of this application. The communication method 100 may include S110 to S140.

S110: A second device sends a plurality of data units to a first device. Correspondingly, the first device receives the plurality of data units from the second device.

The data unit may be a transport block TB, a code block CB, or a code block group CBG.

The plurality of data units may carry a first threshold. The first threshold may be a maximum quantity of erroneous data units; or the first threshold may be a maximum proportion of a quantity of erroneous data units to a total quantity of the data units.

In some embodiments, header information corresponding to the plurality of data units may carry the first threshold. In other words, the first threshold may be indicated by the header information corresponding to the plurality of data units.

In an example, when the data unit is a TB, one TB may carry one header. For example, each TB may carry one header, and therefore, header information of each TB may carry the first threshold. Alternatively, a plurality of TBs share one header, and therefore, the header information may carry the first threshold. For example, the header information carries a first identifier, and the first identifier indicates the first threshold.

In another example, when the data unit is a CBG, one CBG may carry one header. For example, each CBG may carry one header, and therefore, header information of each CBG may carry the first threshold. Alternatively, a plurality of CBGs share one header (compared with one TB sharing one header), and therefore, the header information may carry the first threshold. For example, the header information carries a first identifier, and the first identifier indicates the first threshold.

In still another example, when the data unit is a CB, one CB may carry one header. For example, each CB may carry one header, and therefore, header information of each CB may carry the first threshold. Alternatively, a plurality of CBs share one header (compared with one TB sharing one header), and therefore, the header information may carry the first threshold. For example, the header information carries a first identifier, and the first identifier indicates the first threshold.

Two bits are used as an example. Table 1 provides a feasible example of the first threshold (that is, an error-tolerant characteristic). As shown in Table 1, the header information may carry the first identifier. For example, the first identifier is 01, indicating that the first threshold is 0.1. In other words, a maximum proportion of the quantity of erroneous data units to a quantity of the plurality of data units is 0.1 (10%). It should be understood that, Table 1 may be predefined in a protocol, or may be pre-agreed between the first device and the second device. This is not limited in this application.

**Table 1**

| | | | | |
|---|---|---|---|---|
| First identifier | 00 | 01 | 10 | 11 |
| First threshold | 0 | 0.1 | 0.2 | 0.3 |

In some other embodiments, the first threshold may be carried at a non-header position in the plurality of data units. For example, the plurality of data units (for example, TBs) include a medium access control control element (MAC control element, MAC-CE), and the first threshold may be carried in the MAC-CE.

Specifically, after receiving the plurality of data units, a physical PHY layer of the first device performs a CRC check, and delivers upward a data packet and a corresponding CRC check result to a MAC layer. The MAC layer may learn of a position of the MAC-CE in the TB and has permission to parse feature stream information of the MAC-CE (for example, the first threshold). Then, the MAC layer of the first device determines that, if CRC checks of all CBs that correspond to the MAC-CE succeed, the MAC layer parses the information of the MAC-CE to obtain the first threshold.

It should be noted that, the plurality of data units received by the first device may correspond to a type of data units (for example, a first type of data units), and there is a correspondence between the first type of data units and the first threshold. It should be understood that, the first device may receive a plurality of types of data units, and thresholds corresponding to different types of data units may be different. That is, error-tolerant characteristics (or degrees of error tolerance) corresponding to different feature streams are different.

For example, in addition to receiving the first type of data units, the first device may further receive a second type of data units, where the first type of data units corresponds to the first threshold, the second type of data units corresponds to a second threshold, and the first threshold is different from the second threshold. The first type of data units may be referred to as a feature stream 1, and the second type of data units may be referred to as a feature stream 2. The feature stream 1 and the feature stream 2 may be different features extracted by a network encoder.

For example, if importance of the first type of data units is higher than that of the second type of data units, error tolerance of the first type of data units is lower than error tolerance of the second type of data units. The first threshold may be 10%, and the second threshold may be 30%. In other words, when a proportion of a quantity of erroneous data units in the first type of data units to a total quantity of the data units is greater than 10%, it is required to feed back that a first type of data unit is received in error or feed back a first type of data unit that needs to be retransmitted; and only when a proportion of a quantity of erroneous data units in the second type of data units to the total quantity of the data units is greater than 30%, it is required to feed back that a second type of data unit is received in error or feed back a second type of data unit that needs to be retransmitted.

If the second device sends the plurality of types of data units, the second device further needs to indicate a threshold corresponding to each type of data units and a length occupied by each type of data units, and may further indicate a mapping relationship between each type of data units and the threshold. The mapping relationship may be predefined; or the mapping relationship may be notified in information. For example, the mapping relationship is indicated by third indication information. The third indication information may be an index, and different indexes may indicate correspondences between different data units and different thresholds.

For example, when the second device sends the plurality of types of data units to the first device, the second device may further send feature stream information to the first device, where the feature stream information may include a threshold corresponding to each type of data units and a length occupied by each type of data units. The threshold corresponding to each type of data unit (also referred to as an error-tolerant characteristic of each type of feature stream) and the length occupied by each type of data unit (also referred to as a length occupied by each type of feature stream) may be indicated in same information or in different information. For example, the error-tolerant characteristic of each type of feature stream and the length occupied by each type of feature stream may be indicated by the header information or the MAC-CE. For another example, the threshold corresponding to each type of data units may be indicated by the following first indication information, and the length occupied by each type of feature stream may be indicated by the header information or the MAC-CE.

In some embodiments, as shown in FIG. 7 to FIG. 9, the feature stream information may be indicated by the header information corresponding to the plurality of data units. In other words, the error-tolerant characteristic (Tolerance) of each type of feature stream and the length (Feature) occupied by each type of feature stream may be indicated by a header H corresponding to the plurality of data units.

For example, as shown in FIG. 7, data units (where the data unit may be the TB, the CB, or the CBG) of a PHY layer of the second device each may include a header H, and the header H may include Feature and Tolerance. In an example, Feature may indicate a length (POS) occupied by each type of feature stream, and Tolerance may indicate an error-tolerant characteristic (TPOS) corresponding to each type of feature stream. In another example, Feature may indicate a quantity of types of feature streams (Num) included in the data units and a length (POS) corresponding to each type of feature stream, and Tolerance may indicate an error-tolerant characteristic (TPOS) corresponding to each type of feature stream. In this example, Feature indicates a specific quantity of types of feature streams in the TB/CB/CBG and a length (a quantity of bits) occupied by each type of feature stream, and Tolerance indicates an error-tolerant characteristic corresponding to each type of feature stream in the TB/CB/CBG. It should be understood that, when Feature includes Num and POS, a quantity of bits corresponding to a last feature stream may be omitted.

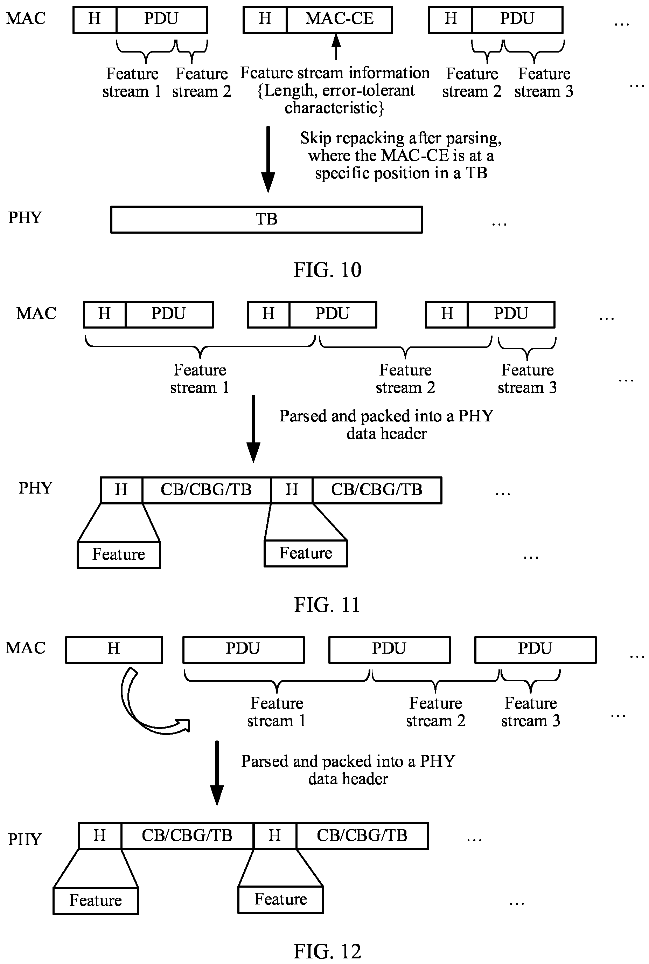

In some other embodiments, as shown in FIG. 10, the feature stream information may be indicated by the MAC-CE. In other words, the error-tolerant characteristic (Tolerance) of each type of feature stream and the length (Feature) occupied by each type of feature stream may be carried in the MAC-CE. In an example, Feature may indicate a length (POS) occupied by each type of feature stream, and Tolerance may indicate an error-tolerant characteristic (TPOS) corresponding to each type of feature stream. In another example, Feature may indicate a quantity of types of feature streams (Num) included in the data units and a length (POS) corresponding to each type of feature stream, and Tolerance may indicate an error-tolerant characteristic (TPOS) corresponding to each type of feature stream.

In still some other embodiments, as shown in FIG. 11 to FIG. 13, the error-tolerant characteristic of each type of feature stream in the feature stream information may be independently indicated by the indication information. The indication information may be, for example, the following first indication information. The length, in the feature stream information, that is occupied by each type of feature stream may be indicated by the header information, that is, Feature may be indicated in the header H.

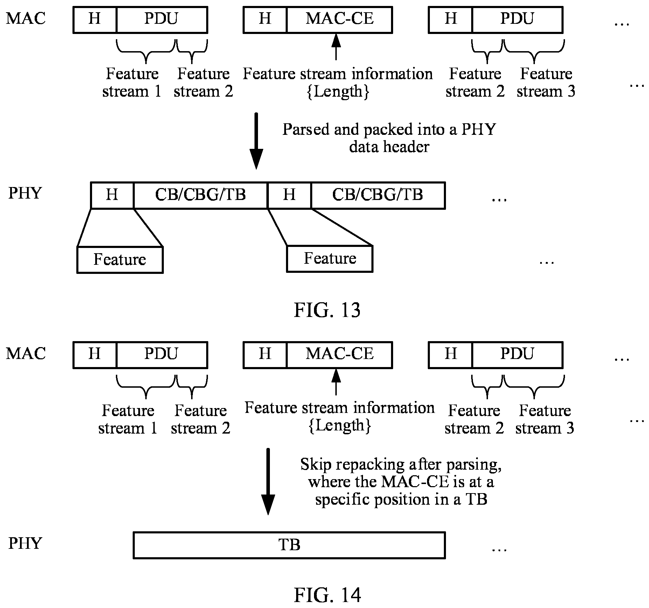

In still some other embodiments, as shown in FIG. 14, the error-tolerant characteristic of each type of feature stream in the feature stream information may be independently indicated by the indication information. The indication information may be, for example, the following first indication information. The length, in the feature stream information, that is occupied by each type of feature stream may be indicated by the MAC-CE, that is, Feature may be indicated by the MAC-CE in the TB.

Data of the PHY layer of the second device is obtained by parsing and reassembling data of a MAC layer, the data of the MAC layer is obtained by parsing and reassembling data of an RLC layer at a higher layer of the MAC layer, and the data of the RLC layer is obtained by parsing and reassembling data of a PDCP layer at a higher layer of the RLC layer. In a procedure of transferring the data packet from an application layer to the PHY through layer-by-layer downward transfer, the header H needs to be parsed and repacked for each possible segmentation. In addition, it needs to be acknowledged that the feature stream information in the header H is not lost.

It should be understood that, an IP data packet of the application layer carries the feature stream information, and the feature stream information may be obtained through feedback from an application layer of a user, or may be preset by an application. It should be understood that, a position at which the feature stream information is placed is not limited in this embodiment of this application. The feature stream information may be placed at a header position of the data packet, or may be placed at a tail position of the data packet. Alternatively, information of all headers is packed as a whole, or may be placed at another agreed position. In this embodiment of this application, that the feature stream information is at the header position is mainly used for description.

When a MAC PDU is delivered to the PHY layer, the PHY layer parses a header of the MAC PDU to obtain information about the length of each type of feature stream and the error-tolerant characteristic of each type of feature stream, and may determine, based on a length of the TB and quantities and sizes of CBs/CBGs, a mapping relationship between feature stream information carried in a header at the MAC layer and a position of the TB/CB/CBG, so that the PHY layer may determine a mapping relationship with the MAC PDU based on a length of the TB/CB/CBG and the information about the length of each type of feature stream.

With reference to FIG. 7 to FIG. 14, the following describes a data reassembling procedure in which the data of the MAC layer is transferred to the PHY layer.

As shown in FIG. 7, the feature stream information at the MAC layer is added to a header position of the PDU. For example, the feature stream information of the MAC layer is added to a header position of each PDU. The feature stream information includes the length of each type of feature stream and the error-tolerant characteristic of each type of feature stream. The PHY layer obtains corresponding header information through parsing and adds a header to the TB/CB/CBG. For example, the PHY layer may add the header to each TB/CB/CBG, and header information of each TB/CB/CBG carries the feature stream information. Subsequently, CRC check information may be added to the header and the TB/CB data as a whole at the PHY layer, and then the header and the TB/CB data may be sent to the first device.

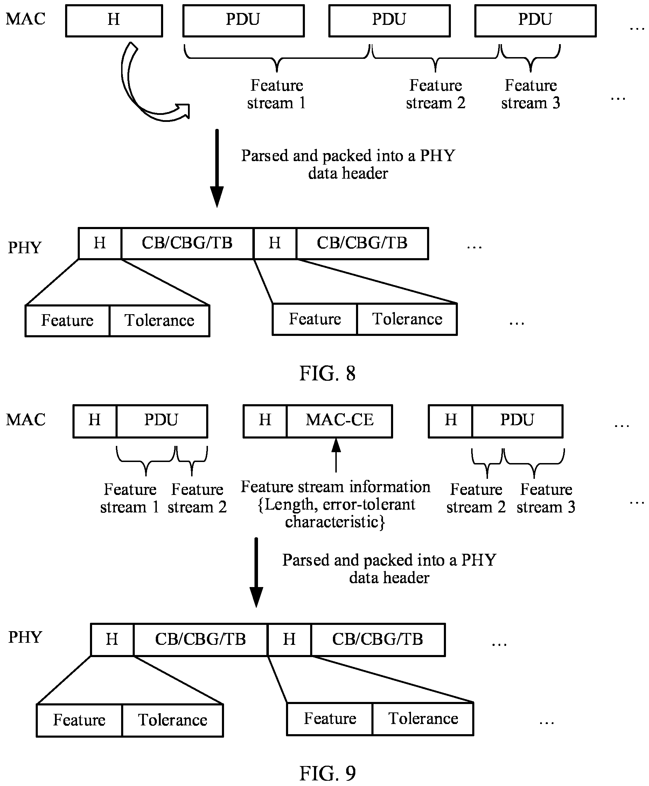

As shown in FIG. 8, the feature stream information at the MAC layer may be packed as a whole as a first transmitted PDU. The feature stream information includes the length of each type of feature stream and the error-tolerant characteristic of each type of feature stream. The PHY layer obtains corresponding header information through parsing and adds a header to the TB/CB/CBG. For example, header information of each TB/CB/CBG carries the feature stream information. Subsequently, CRC check information may be added to the header and the TB/CB data as a whole at the PHY layer, and then the header and the TB/CB data may be sent to the first device. Compared with a manner of adding the header at a front end of each PDU, an integral packing can better reduce overheads of the header and improve transmission efficiency. In addition, in a downward deliver procedure, parsing and repacking do not need to be performed for a plurality of times based on different segmentation lengths in an integral packing manner, thereby reducing processing overheads.

As shown in FIG. 9, the MAC layer does not place the feature stream information at the header position, but adds a field to the MAC-CE to centrally indicate feature stream information of a PDU set. The feature stream information includes the length of each type of feature stream and the error-tolerant characteristic of each type of feature stream. The PHY layer obtains corresponding header information through parsing and adds a header to the TB/CB/CBG. For example, the PHY layer may add the header to each TB/CB/CBG, and header information of each TB/CB/CBG carries the feature stream information. Subsequently, CRC check information may be added to the header and the TB/CB data as a whole at the PHY layer, and then the header and the TB/CB data may be sent to the first device.

As shown in FIG. 10, the MAC layer does not place the feature stream information at the header position, but adds a field to the MAC-CE to centrally indicate feature stream information of a PDU set. The feature stream information includes the length of each type of feature stream and the error-tolerant characteristic of each type of feature stream. Different from FIG. 9, the PHY layer no longer performs parsing and repacking to generate the header. The MAC-CE is at a specific position of the TB, but the PHY does not sense the specific position. Subsequently, CRC check information may be added to the TB data as a whole at the PHY layer, and then the TB data may be sent to the first device. The first device may perform a CRC check, and delivers upward the data packet and the corresponding CRC check result to the MAC layer of the first device. The MAC layer of the first device determines that, if the CRC checks of all the CBs that correspond to the MAC-CE succeed, the MAC layer of the first device parses the information of the MAC-CE to obtain the feature stream information from the MAC-CE.

As described above, the header information and the MAC-CE may carry only the length (Feature), in the feature stream information, that is occupied by each type of feature stream. In FIG. 11 corresponding to FIG. 7, the header H of the MAC layer may indicate Feature but not Tolerance. For example, each header H of the MAC layer may indicate Feature but not Tolerance. For a specific description of a data reassembling procedure, refer to FIG. 7. In FIG. 12 corresponding to FIG. 8, the header H of the MAC layer may indicate Feature but not Tolerance. For example, each header H of the MAC layer may indicate Feature but not Tolerance. For a specific description of a data reassembling procedure, refer to FIG. 8. In FIG. 13 corresponding to FIG. 9, the header H of the MAC layer may indicate Feature but not Tolerance. For example, each header H of the MAC layer may indicate Feature but not Tolerance. For a specific description of a data reassembling procedure, refer to FIG. 9. In FIG. 14 corresponding to FIG. 10, the MAC-CE may indicate Feature but not Tolerance. For a specific description, refer to FIG. 10.

It should be noted that, if the header H carries the feature stream information, the header H is non-error-tolerant data, and in a procedure of parsing the data packet, it needs to be acknowledged that the header H is not in error. If the header H does not carry the feature stream information, correct parsing cannot be performed, and the feature stream information in the header H needs to be re-obtained.

S120: The first device determines, based on a quantity of erroneous data units, in the plurality of data units, that are received in error and the first threshold, to send first feedback information.

The first feedback information indicates that the erroneous data units are received in error. Further, in some examples, the first feedback information may indicate retransmission of the erroneous data unit.

The "erroneous data unit received in error" may be understood as a data unit with a check error when the first device checks the plurality of received data units. For example, the first device may perform a check by using a CRC check method. In other words, after receiving the plurality of data units, the first device may check the plurality of data units through CRC check, and parse the plurality of data units after the check succeeds.

In an example, when the data unit is a TB, the "erroneous data unit received in error" may be a TB with a TB-CRC check error when the first device performs a cyclic redundancy check CRC check on the received TB (that is, a TB-CRC check).

In another example, when the data unit is a CB, the "erroneous data unit received in error" may be a CB with a CB-CRC check error when the first device performs the CRC check on the received CB (that is, a CB-CRC check).

In still another example, when the data unit is a CBG, the "erroneous data unit received in error" may be a CBG corresponding to a case in which there is at least one CB-CRC check error in the CBG, when the first device performs the CRC check on a CB in the received CBG.

Optionally, after performing CRC check on the received TB/CB/CBG, the first device may feed back ACK/NACK to the second device in the manner shown in FIG. 2 or FIG. 3. However, the second device does not perform data retransmission based on ACK/NACK.

In some embodiments, when a proportion of the quantity of erroneous data units that are received in error to the quantity of the plurality of data units is greater than the first threshold, it is determined to send the first feedback information. Optionally, when the proportion of the quantity of erroneous data units that are received in error to the quantity of the plurality of data units is less than or equal to the first threshold, it is determined to skip sending the first feedback information, and to send third feedback information.

In some other embodiments, when a proportion of the quantity of erroneous data units that are received in error to the quantity of the plurality of data units is greater than or equal to the first threshold, it is determined to send the first feedback information. Optionally, when the proportion of the quantity of erroneous data units that are received in error to the quantity of the plurality of data units is less than the first threshold, it is determined to skip sending the first feedback information, and to send third feedback information.

The first threshold may be a proportion value. For example, the first threshold may be 10%, 20%, or 30%.

In some other embodiments, when the quantity of erroneous data units that are received in error is greater than the first threshold, it is determined to send the first feedback information. Optionally, when the quantity of erroneous data units that are received in error is less than or equal to the first threshold, it is determined to skip sending the first feedback information, and to send third feedback information.

In some other embodiments, when the quantity of erroneous data units that are received in error is greater than or equal to the first threshold, it is determined to send the first feedback information. Optionally, when the quantity of erroneous data units that are received in error is less than the first threshold, it is determined to skip sending the first feedback information, and to send third feedback information.

The first threshold may be a numerical value. For example, the first threshold may be 100, 200, or 300.

In this step, the first device may determine, based on the quantity of erroneous data units and the first threshold, whether to send the first feedback information. The first feedback information is sent only when a specific condition is met, where for example, the quantity of erroneous data units is greater than the first threshold; or the proportion of the quantity of erroneous data units to the total quantity of the data units is greater than the first threshold, so that the second device retransmits, based on the first feedback information, the erroneous data unit or the plurality of data units received by the first device in S110. This helps reduce a quantity of retransmissions and improve transmission efficiency.

It should be understood that, the first threshold may be understood as the foregoing error-tolerant characteristic, and the first feedback information may be FNACK, where FNACK (feature negative acknowledgement) indicates that feature transmission fails, and may indicate the second device to retransmit a TB/CB/CBG for which FNACK is fed back. The third feedback information may be FACK, where FACK (feature acknowledgment) indicates that feature transmission succeeds, and may indicate that transmission of the feature stream is completed, that is, the plurality of data units are successfully transmitted.

Optionally, before S120 is performed, the communication method 100 may further include the following step: The second device sends first indication information to the first device. Correspondingly, the first device receives the first indication information from the second device. The first indication information indicates the first threshold.

In some embodiments, if the first device is a terminal device, the first indication information may be carried in downlink control signal (downlink control information, DCI) signaling. In other words, the first indication information may be carried in DCI signaling from a network device.

In some other embodiments, if the first device is a network device, the first indication information may be carried in uplink control signal (uplink control information, UCI) signaling. In other words, the first indication information may be carried in UCI signaling from a terminal device.

For example, a field of one bit to four bits is added to the UCI or the DCI, to indicate the thresholds corresponding to the different types of data units. Two bits are used as an example. Table 2 provides a feasible example of the first threshold. As shown in Table 2, the UCI or the DCI may carry the first indication information. For example, the first indication information is 01, indicating that the first threshold is 0.1. In other words, a maximum proportion of the quantity of erroneous data units to a quantity of the plurality of data units is 0.1 (10%). It should be understood that, Table 2 may be predefined in a protocol, or may be pre-agreed between the first device and the second device. This is not limited in this application.

**Table 2**

| | | | | |
|---|---|---|---|---|
| First indication information | 00 | 01 | 10 | 11 |
| First threshold | 0 | 0.1 | 0.2 | 0.3 |

Optionally, before S120 is performed, the communication method 100 may further include the following step: The second device sends second indication information to the first device. Correspondingly, the first device receives the second indication information from the second device.

The second indication information may indicate to start an error-tolerant transmission service. It should be understood that, when the first device receives the second indication information, it is equivalent to that an error-tolerant mode is started, and the first feedback information may be sent based on the quantity of erroneous data units and the first threshold. When the first device does not receive the second indication information, it is equivalent to that the error-tolerant mode is not started. In this case, if the first device determines that there is a data unit received in error, the first device needs to feed back to a peer end that the data unit is received in error, which is relative to a procedure of feeding back ACK/NACK as described in FIG. 2 or FIG. 3.

In an example, the second indication information may include the header information. In another example, the second indication information may include the first indication information. In other words, the first device obtains the first threshold, or the first threshold is configured. It is considered that the error-tolerant mode is started, that is, the error-tolerant transmission service is started.

In some embodiments, if the first device is the terminal device, the second indication information may be carried in downlink control signal DCI signaling. In other words, the second indication information may be carried in DCI signaling from a network device.

In some other embodiments, if the first device is the network device, the second indication information may be carried in uplink control signal UCI signaling. In other words, the second indication information may be carried in UCI signaling from a terminal device.

For example, a field of one bit is added to the UCI or the DCI. The field of one bit may be 0 or 1. 0 indicates that the error-tolerant transmission service is not started, and 1 indicates that the error-tolerant transmission service is started.

It should be noted that, if the error-tolerant transmission service is started, the second device does not perform feedback after receiving ACK/NACK of the TB/CB/CBG, and determines, after receiving FACK/FNACK feedback related to the feature stream, whether to retransmit the TB/CB/CBG.

S130: The first device sends the first feedback information to the second device. Correspondingly, the second device receives the first feedback information from the first device.

The first feedback information indicates that the erroneous data unit is received in error. Further, in some examples, the first feedback information may indicate retransmission of the erroneous data unit.

S140: The second device determines, based on the first feedback information, an erroneous data unit that needs to be retransmitted.

In this step, after receiving the first feedback information (for example, FNACK) from the first device, the second device may determine the erroneous data unit, so that the erroneous data unit can be retransmitted.

Optionally, the second device may further receive the third feedback information (for example, FACK) from the first device. After receiving the third feedback information (for example, FACK), the second device determines that current data transmission is successful. In this case, the second device may continue to send data that needs to be sent.

In this embodiment of this application, first, a head design for the PDU or the TB/CB/CBG is added based on an existing NR protocol stack, so that the feature stream information of the application layer can be delivered downward to the MAC layer, so that data carrying the feature stream information can be sent from the second device to the first device; second, the field may be added to the UCI/DCI to indicate to start the error-tolerant transmission service, so as to enable transmission of an error-tolerant service; and last, compared with a HARQ retransmission feedback mechanism, this application provides a feedback solution based on the error-tolerant characteristic, to implement error-tolerant transmission of feature stream data and reduce the quantity of retransmissions, so that a requirement of a high-rate and low-latency service can be more efficiently supported.

It should be understood that, in the solution provided in this application, even if the CRC check is not met, a bit error region may be recovered by a generator of a receive end (that is, the first device), and data in the bit error region does not need to be retransmitted, thereby reducing the quantity of retransmissions and improving transmission efficiency.

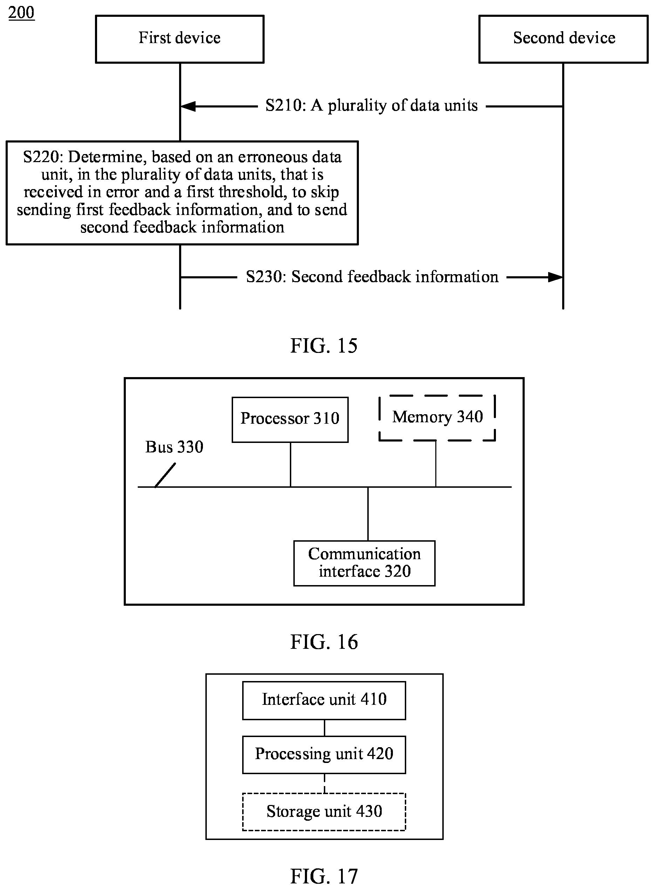

FIG. 15 is a schematic flowchart of another communication method according to an embodiment of this application. The communication method 200 may include S210 to S230.

S210: A second device sends a plurality of data units to a first device. Correspondingly, the first device receives the plurality of data units from the second device. The data unit may be a transport block TB, a code block CB, or a code block group CBG.

For specific content of this step, refer to S110. Details are not described herein again.

S220: The first device determines, based on an erroneous data unit, in the plurality of data units, that is received in error and a first threshold, to skip sending first feedback information, and to send second feedback information.

The "erroneous data unit received in error" may be understood as a data unit with a check error when the first device checks the plurality of received data units. For example, when the data unit is a TB, the "erroneous data unit received in error" may be a TB with a TB-CRC check error when the first device performs a cyclic redundancy check CRC check on the received TB (that is, a TB-CRC check). For another example, when the data unit is a CB, the "erroneous data unit received in error" may be a CB with a CB-CRC check error when the first device performs the CRC check on the received CB (that is, a CB-CRC check). For another example, when the data unit is a CBG, the "erroneous data unit received in error" may be a CBG corresponding to a case in which there is at least one CB-CRC check error in the CBG, when the first device performs the CRC check on a CB in the received CBG.

In this step, the first device may determine, based on a quantity of erroneous data units, in the plurality of data units, that are received in error and the first threshold, to skip sending the first feedback information, and to send the second feedback information, where the second feedback information indicates the erroneous data unit received in error.

In some embodiments, when a proportion of the quantity of erroneous data units that are received in error to a quantity of the plurality of data units is less than or equal to the first threshold, the first feedback information is skipped being sent, and the second feedback information is sent.

In some other embodiments, when a proportion of the quantity of erroneous data units that are received in error to a quantity of the plurality of data units is less than the first threshold, the first feedback information is skipped being sent, and the second feedback information is sent.

In some other embodiments, when the quantity of erroneous data units that are received in error is less than or equal to the first threshold, the first feedback information is skipped being sent, and the second feedback information is sent.

In some other embodiments, when the quantity of erroneous data units that are received in error is less than the first threshold, the first feedback information is skipped being sent, and the second feedback information is sent.

The second feedback information may indicate some specific data units received in error to the second device. However, the quantity of erroneous data units or the proportion of the quantity of erroneous data units is within a specific range, and the first device can automatically recover without performing data retransmission, thereby reducing a quantity of retransmissions and improving transmission efficiency.

It should be noted that, in some embodiments, the second feedback information and the third feedback information in S120 may be separately sent. In some other embodiments, the second feedback information may be carried in the third feedback information. In other words, when the first device feeds back FACK to indicate that feature stream data is successfully transmitted, it may also indicate that there are some specific data units received in error in a transmission procedure, and the data units received in error may be recovered by the first device without retransmission.

S230: The first device sends the second feedback information to the second device. Correspondingly, the second device receives the second feedback information from the first device. The second feedback information indicates the erroneous data unit received in error.

Optionally, the communication method 200 may further include: The second device performs channel measurement such as channel estimation or channel prediction based on the second feedback information.

In this embodiment of this application, first, a header design for a PDU or the TB/CB/CBG is added based on an existing NR protocol stack, so that feature stream information of an application layer can be delivered downward to a MAC layer, so that data carrying the feature stream information can be sent from the second device to the first device; second, a field may be added to UCI/DCI to indicate to start an error-tolerant transmission service, so as to enable transmission of an error-tolerant service; and last, the first device may determine, based on the erroneous data unit and the first threshold, to skip sending the first feedback information and to send the second feedback information. The second feedback information may indicate the specific data units received in error to the second device. However, the quantity of erroneous data units or the proportion of the quantity of erroneous data units is within the specific range, and the first device can automatically recover without performing data retransmission, thereby reducing the quantity of retransmissions and improving transmission efficiency. In addition, the second device may also perform channel measurement such as channel estimation or channel prediction based on the second feedback information.

With reference to FIG. 6 to FIG. 15, the foregoing describes the communication method provided in embodiments of this application. With reference to FIG. 16 and FIG. 17, the following describes a communication apparatus provided in embodiments of this application.

To implement functions in the methods provided in this application, both a terminal device and a network device may include a hardware structure and/or a software module, and implement the foregoing functions in a form of the hardware structure, the software module, or the hardware structure plus the software module. Whether a function in the foregoing functions is performed by using the hardware structure, the software module, or the hardware structure plus the software module depends on particular applications and design constraints of the technical solutions.

FIG. 16 is a block diagram of a communication apparatus according to an embodiment of this application. The communication apparatus includes a processor 310 and a communication interface 320. The processor 310 and the communication interface 320 may be connected to each other through a bus 330. The communication apparatus may be the foregoing first device or the foregoing second device.

Optionally, the communication apparatus may further include a memory 340. The memory 340 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 340 is configured to store related instructions and data.

The processor 310 may be one or more central processing units (central processing units, CPUs). When the processor 310 is one CPU, the CPU may be a single-core CPU or a multicore CPU.

For example, when the communication apparatus is the first device, the communication interface 320 is configured to perform the following operation: receiving a plurality of data units; and the processor 310 is configured to perform the following operation: controlling, based on a quantity of erroneous data units, in the plurality of data units, that are received in error and a first threshold, the communication interface 320 to send first feedback information.

For example, when the communication apparatus is the second device, the communication interface 320 is configured to perform the following operation: sending a plurality of data units; and the processor 310 is configured to perform the following operation: determining, based on first feedback information, an erroneous data unit that needs to be retransmitted.

The foregoing content is merely used as an example for description. The communication apparatus is the first device or the second device, and is responsible for performing the method or steps related to the first device or the second device in the foregoing method embodiments.

The foregoing description is merely an example description. For specific content, refer to content shown in the foregoing method embodiments.

It should be noted that, the apparatus embodiment shown in FIG. 16 may be used for implementing content described in FIG. 6. For specific execution steps and a specific method of the apparatus shown in FIG. 16, refer to the content described in the method embodiments corresponding to FIG. 6. The apparatus embodiment shown in FIG. 16 may also be used for implementing content described in FIG. 15. For specific execution steps and a specific method of the apparatus shown in FIG. 16, refer to content described in the method embodiments corresponding to FIG. 15.

FIG. 17 is a block diagram of another communication apparatus according to an embodiment of this application. The communication apparatus may be a first device or a second device, or may be a chip or a module in the first device or the second device, and is configured to implement the methods in the foregoing embodiments.

The communication apparatus includes an interface unit 410 and a processing unit 420. The interface unit 410 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. A unified description is provided herein. Details are not described below again.

For example, when the communication apparatus is the first device, the interface unit 410 may be configured to receive a plurality of data units, receive first indication information, receive second indication information, or the like. The processing unit 420 is configured to perform content of steps related to the first device, such as parsing data and determining to send first feedback information. For example, the processing unit 420 is configured to control, based on a quantity of erroneous data units, in the plurality of data units, that are received in error and a first threshold, the interface unit 410 to send the first feedback information, or the like.

For example, when the communication apparatus is the second device, the interface unit 410 may be configured to send a plurality of data units, send first indication information, send second indication information, or the like. The processing unit 420 is configured to perform content of steps related to the second device, such as determining to retransmit data.

The foregoing content is merely used as an example for description. The communication apparatus is the first device or the second device, and is responsible for performing the method or steps related to the first device or the second device in the foregoing method embodiments.

Optionally, the communication apparatus further includes a storage unit 430. The storage unit 430 is configured to store a program or code used for performing the foregoing methods.

It should be noted that, the apparatus embodiment shown in FIG. 17 may be used for implementing the content described in FIG. 6. For specific execution steps and a specific method of the apparatus shown in FIG. 17, refer to the content described in the method embodiments corresponding to FIG. 6. The apparatus embodiment shown in FIG. 17 may also be used for implementing the content described in FIG. 15. For specific execution steps and a specific method of the apparatus shown in FIG. 17, refer to the content described in the method embodiments corresponding to FIG. 15.

It should be noted that, the apparatus each in FIG. 16 and FIG. 17 may alternatively be a chip, a chip system, or the like. This is not limited herein. When the apparatus each shown in FIG. 16 and FIG. 17 is the chip or the chip system, the apparatus can be configured to implement functions of the terminal device or the network device.

This application further provides a chip, including a processor configured to invoke instructions from a memory and run the instructions stored in the memory, so that a communication device on which the chip is installed performs the methods in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor. The processor is configured to be coupled to a memory, and configured to perform the method and functions of the network device or the terminal device in any one of the foregoing embodiments.

This application further provides a computer program product including instructions. When the computer program product runs on a computer, the methods in the foregoing embodiments are implemented.

This application further provides a computer program. When the computer program runs on a computer, the methods in the foregoing embodiments are implemented.

This application further provides a computer-readable storage medium. The computer-readable storage medium stores a computer program. When the computer program is executed by a computer, the methods in the foregoing embodiments are implemented.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working procedure of the system, apparatus, and units that are described above, refer to a corresponding procedure in the foregoing method embodiments. Details are not described herein again.

In the several embodiments provided in this application, it should be understood that the disclosed system, apparatus, and method may be implemented in other manners. For example, the apparatus embodiments described above are merely examples. For example, division of the units is merely logical function division. During an actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

Units described as separate components may or may not be physically separate, and components displayed as units may or may not be physical units, to be specific, may be located at one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a plurality of data units; and
sending first feedback information based on a quantity of erroneous data units, in the plurality of data units, that are received in error and a first threshold, wherein the first feedback information indicates that the erroneous data units are received in error.

2. The method according to claim 1, wherein the sending the first feedback information based on the quantity of erroneous data units, in the plurality of data units, that are received in error and the first threshold comprises:
sending the first feedback information when a proportion of the quantity of erroneous data units that are received in error to a quantity of the plurality of data units is greater than the first threshold.

3. The method according to claim 1, wherein the sending the first feedback information based on the quantity of erroneous data units, in the plurality of data units, that are received in error and the first threshold comprises:
sending the first feedback information when the quantity of erroneous data units that are received in error is greater than the first threshold.

4. The method according to claim 2 or 3, wherein the first threshold is indicated by header information corresponding to the plurality of data units.

5. The method according to claim 2 or 3, wherein the method further comprises:
receiving first indication information, wherein the first indication information indicates the first threshold.

6. The method according to any one of claims 1 to 5, wherein the method further comprises:
receiving second indication information; and
the sending the first feedback information based on the quantity of erroneous data units, in the plurality of data units, that are received in error and the first threshold comprises:
determining, based on the second indication information, to send the first feedback information based on the quantity of erroneous data units, in the plurality of data units, that are received in error and the first threshold.

7. The method according to any one of claims 1 to 6, wherein the data unit is a transport block TB, a code block group CBG, or a code block CB.

8. A communication apparatus, comprising:
an interface unit, configured to receive a plurality of data units; and
a processing unit, configured to control, based on a quantity of erroneous data units, in the plurality of data units, that are received in error and a first threshold, the interface unit to send first feedback information, wherein the first feedback information indicates that the erroneous data units are received in error.

9. The apparatus according to claim 8, wherein that the processing unit is configured to control, based on the quantity of erroneous data units, in the plurality of data units, that are received in error and the first threshold, the interface unit to send the first feedback information comprises:
the processing unit is configured to control, when a proportion of the quantity of erroneous data units that are received in error to a quantity of the plurality of data units is greater than the first threshold, the interface unit to send the first feedback information.

10. The apparatus according to claim 8, wherein that the processing unit is configured to control, based on the quantity of erroneous data units, in the plurality of data units, that are received in error and the first threshold, the interface unit to send the first feedback information comprises:
the processing unit is configured to control, when the quantity of erroneous data units that are received in error is greater than the first threshold, the interface unit to send the first feedback information.

11. The apparatus according to claim 9 or 10, wherein the first threshold is indicated by header information corresponding to the plurality of data units.

12. The apparatus according to claim 9 or 10, wherein
the interface unit is further configured to receive first indication information, wherein the first indication information indicates the first threshold.

13. The apparatus according to any one of claims 8 to 12, wherein
the interface unit is further configured to receive second indication information; and
that the processing unit is configured to control, based on the quantity of erroneous data units, in the plurality of data units, that are received in error and the first threshold, the interface unit to send the first feedback information comprises:
the processing unit is configured to determine, based on the second indication information, to control the interface unit to send the first feedback information based on the quantity of erroneous data units, in the plurality of data units, that are received in error and the first threshold.

14. The apparatus according to any one of claims 8 to 13, wherein the data unit is a transport block TB, a code block group CBG, or a code block CB.

15. A communication apparatus, comprising a processor, wherein the processor is configured to cause, by executing a computer program or instructions or by using a logic circuit, the apparatus to perform the method according to any one of claims 1 to 7.

16. A computer-readable storage medium, wherein the computer-readable storage medium stores a computer program or instructions; and when the computer program or the instructions are run, the method according to any one of claims 1 to 7 is performed.

17. A computer program product, comprising instructions, wherein when the instructions are run, the method according to any one of claims 1 to 7 is performed.
